# EUROPEAN PATENT SPECIFICATION

(11) **EP 1 019 652 B1**
(45) Date of publication and mention of the grant of the patent: **28.08.2002**
(21) Application number: 98945419.4
(22) Date of filing: 01.10.1998
(51) Int. Cl.: F16T 1/00, F16T 1/38

(54) **A DRAIN DEVICE**
ABLEITER
DISPOSITIF DE VIDANGE

(30) Priority: 02.10.1997 GB 9720849; 23.07.1998 GB 9815962
(43) Date of publication of application: 19.07.2000
(73) Proprietor: Domnick Hunter Limited, Birtley, Co. Durham DH3 2SF (GB)
(72) Inventor: FIELDING, Robert, Michael, Blyth Northumberland NE24 3AX (GB); BITTLE, Steven, Ponteland Northumberland NE20 9HQ (GB)
(74) Representative: Belcher, Simon James
(86) International application number: GB9802954
(87) International publication number: WO99018386

(56) References cited:
- BE-A- 520 643
- DE-C- 627 069
- DE-U- 9 002 152
- FR-A- 2 517 020
- FR-A- 2 640 354
- GB-A- 2 274 317
- US-A- 5 469 879

## Description

This invention relates to a drain device which might be used for discharging liquid from a pressurised gas system.

Gas in pressurised gas systems frequently contains a small amount of impurities such as cracked oils or water. These impurities tend to condense out of the gas over time and accumulate. Eventually, this condensate can affect the performance of the gas system adversely.

US-5469879 discloses a condensate removal device for capturing, measuring and removing condensate from a fluid system which contains air or or another gas under pressure. A single sensing probe extends into a vertically arranged condensate collection reservoir to sense the low and high level of condensate, and signals from the probe activate a diaphragm type discharge valve through which condensate can be discharged from the reservoir. Once condensate levels fall below a pre-determined level within the reservoir, the valve is closed while condensate continues accummulates again.

US-4974626 discloses a device which includes a reservoir for collecting a condensate, and capacitive sensors determining the level of the condensate in the reservoir. Collected condensate is discharged through a diaphragm outlet valve. The reservoir is formed as a two-piece moulded hollow body. The top and bottom pieces hollow body have features formed in them by moulding including inlets and outlets for fluid, and mounts for the outlet valve and for level sensors.

It can be desirable to offer users a range of drain devices having reservoirs of different sizes. The formation of the reservoir in the device disclosed in US-4974626 from two moulded pieces has the disadvantage that different moulds must be formed for each size of reservoir.

The invention provides a drain device for discharging liquid from a pressurised gas system, which comprises a reservoir for the liquid and a liquid outlet through which liquid can be discharged from the reservoir, the reservoir being defined by a body section whose cross-section is substantially constant along its length, and by first and second end caps which have on them the inlet and the outlet for the gas in which the liquid is transported, and which are positioned at opposite ends of the body section and are separable from the body section, the reservoir being arranged for use with the body section extending substantially horizontally with the end caps providing the end walls, one of the end caps including a level sensor for sensing the level of liquid in the reservoir.

The drain device of the present invention has the advantage that it can be built with a capacity to suit the requirements of a particular application by adjusting the length of the body section. Common end caps can be used for devices with reservoirs having a range of capacities. This flexibility of design has advantages for the user because products can be built to meet the requirements of his application. The flexibility has advantages for the manufacturer of the device because a range of products can be made without the need to make different components for each individual product. The inventory of components that the manufacturer is required to maintain for manufacture of a range of products, as well as the range of equipment such as moulds for manufacturing those components, is also minimised.

The device of the invention can be made by a method which comprises forming a body section of the device by extrusion, cutting the body section to an appropriate length, and fastening the body section at each of its ends to respective end caps.

The end caps will generally be formed by a moulding process. When the end caps are formed from a polymeric material, the moulding process might be, for example, injection moulding. It will often be preferred for the end caps to be formed from a metal. They might then suitably be formed by casting.

Preferably, one or more of the end caps will have features of the drain device formed in them. These features might include for example inlets and outlets for pressurised gas, outlets for collected liquid, formations for engaging the outlet valve, openings for control components and so on. Some or all of these feature might be formed in the end caps as a result of the moulding process by which the end caps are formed. The features might be added to the end caps in a manufacturing step after the moulding step; the features might be modified or optimised after the moulding step for example by machining.

The inlet for the compressed gas and the outlet for collected liquid can be provided in a common end cap. Preferably, the inlet for the compressed gas is provided in one of the end caps and the outlet for collected liquid will generally be provided in the other of the end caps.

An end cap in which the inlet and outlet for compressed gas are provided can have a plurality of inlets or a plurality of outlets or both, in different relative orientations. Appropriate blanks can be used to select the inlet or outlet for a particular application.

The end cap in which the outlet for collected liquid is provided will generally include formations by which an outlet valve can be mounted on the end cap, to control the discharge of liquid from the reservoir. One of the end caps can include appropriate mounts for at least one sensor by which the level of liquid in the reservoir can be monitored. Signals from the sensor(s) can be used to control the outlet valve. It will often be preferred for the sensors to be mounted on the same end cap as the outlet valve to simplify connections between the sensors and the valve. The end cap with the outlet valve might also include formations for mounting other control equipment including for example connections to an external power supply or a dedicated power supply, indicators (for example of an alarm condition), and so on.

Preferably, the body section of the reservoir has at least one channel formed in it to receive an elongate fastener by which the body section can be fastened to one of the end caps. Preferably, the channel extends through the body section from one of the end caps to the other. Such a channel might accommodate a fastener which extends through the channel from one of the end caps to the other. A channel in the body section can provide protection of the fastener from impact damage. The location of the fastener in a channel can make more secure the location of the body section with respect to the end caps, in particular against impact.

Each of the end caps might have an opening formed in it which can be aligned with a corresponding channel in the body section when the valve is assembled, so that the elongate fastener can be located in the channel with its ends received in the openings in the end caps.

The channel in the body section can be threaded to form a threaded connection with a fastener inserted therein. In particular when the channel is intended to accept a fastener which extends through the body section from one end to the other, it can be preferred for the fastener to connect to an appropriate mating part (for example in the form of a nut and bolt) beyond the ends of the end caps. The fastener can then apply a compressive load to the assembly of the end caps and the body section. Such a fastener is sometimes referred to as a tie rod.

Preferably, the cross-section of the or each channel is closed. This has the advantage of enhancing the protection afforded to the fastener(s) by the channel and to the connection between the body section and the end caps.

Preferably, the body section has a plurality of channels formed in it spaced apart around the periphery of the body section. Preferably, the channels are spaced apart substantially symmetrically around the axis. This can enhance the reliability of the seal between the body section and the end caps.

Preferably, a sealing member is provided between at least one of the end caps and the mating face of the body section. The sealing member might take the form of, for example, a compressible gasket. The material of the gasket will be selected according to the substances with which it will come into contact when in use. Examples of suitable materials might include for example silicone rubbers, ethylene propylene rubbers and so on. A formation might be provided in at least one of the facing surfaces of one of the end caps and the corresponding end wall of the body section for locating a sealing member. For example, a groove might be formed in one or both of the end walls of the body section in which an O-ring can be received.

Preferably, the materials of the end caps and the body section are substantially the same so that for example their thermal expansion coefficients are similar. This can make the seal between the end caps and the body section less vulnerable to changes in ambient conditions, especially temperature. For example it will generally be preferred for the body section together with the end caps to be formed from metallic materials or for them all to be formed from polymeric materials.

Particularly preferred metallic materials for the end caps or the body section or both include aluminium and its alloys. An example of a suitable aluminium alloy is HE30TF which has appropriate high tensile strength and contains appropriate alloy components which facilitate formation of the section by extrusion. Appropriate polymeric materials might include for example polyamides, polyesters, polycarbonates and the like. Polymeric materials used in the drain device can include fibres for reinforcement, for example fibres of glass or of carbon.

The internal cross-section of the body section will preferably be generally rounded, especially circular. This has the advantage of being able to withstand high internal pressures. The internal cross-sectional area of the body section will often be at least about 100 cm², preferably at least about 150 cm². The cross-sectional area will generally be less than about 1200 cm², and often less than about 400 cm².

The length of the body section will often be at least about 3 cm, preferably at least about 6 cm, more preferably at least about 10 cm. The length of the body section will often be less than about 60 cm, preferably less than about 45 cm.

The volume of the reservoir will generally be at least about 500 cm³. The volume will generally be less than about 8000 cm³.

The drain device has the advantage that a common end cap can be used to form the reservoir irrespective of the volume of the reservoir: the volume can be selected by use of a body section with appropriate dimensions. The sensor can cause an open signal to be suppled to a discharge valve when the liquid level in the reservoir exceeds a predetermined level. The valve can then remain open until the liquid level drops to below a second predetermined level, when the sensor can cause a close signal to be supplied to the valve. This arrangement has the advantage that the sensor can be used in drain devices with a range of volumes without having to be recalibrated according to the reservoir volume. In another arrangement, the valve might remain open for a predetermined period which is selected according to the volume of liquid in the reservoir that should be discharged. In this arrangement, the period for which the discharge valve remains open might have to be changed according to the volume of the reservoir.

When the drain device is arranged horizontally in use, it will often have a low aspect ratio so that its height is less than its length (the length being measured along the axis of the reservoir). This can have the advantage that significant changes in the volume of liquid in the reservoir involve relatively small changes in the depth of the liquid. This can be arranged to reduce the frequency with which the discharge valve has to open to be minimised, with the advantage that there is reduced wear on component of the drain device.

Preferably, the level sensor is a capacitive sensor. Preferably, one of the electrodes of the capacitive sensor is provided by the body of the end cap itself.

Preferably, at least one of (a) the inlet for the gas in which the liquid is transported, (b) the outlet for the said gas, and (c) the drain for collected liquid, is provided in the end cap. Those elements which are not provided in the end cap can be provided in another part of the reservoir.

The drain device with the level sensor in its end cap can incorporate any of the features referred to above in relation to the drain device of the other aspect of the invention.

The axis of the body section will preferably then be arranged horizontally when the device is in use. A reservoir with a constant cross-section can then be defined by a second end cap positioned at the end of the body section opposite to the end cap with the level sensor. This construction optimises the advantage of the flexibility of design (in particularly in terms of capacity of the reservoir) that is made possible by incorporating the level sensor in the end cap. When the device includes two end caps, it can be preferred for the inlet and the outlet for the gas in which the liquid is transported are provided in one of the end caps and the outlet for collected liquid is provided in the other of the end caps.

The present invention will now be described, by way of example only, with reference to the accompanying drawings, in which:
Figure 1 is an exploded side view of a drain device according to the invention,
Figure 2 is a plan view of the bottom end cap of the device shown in Figure 1,
Figure 3 is an end view of the body section of the device shown in Figure 1.

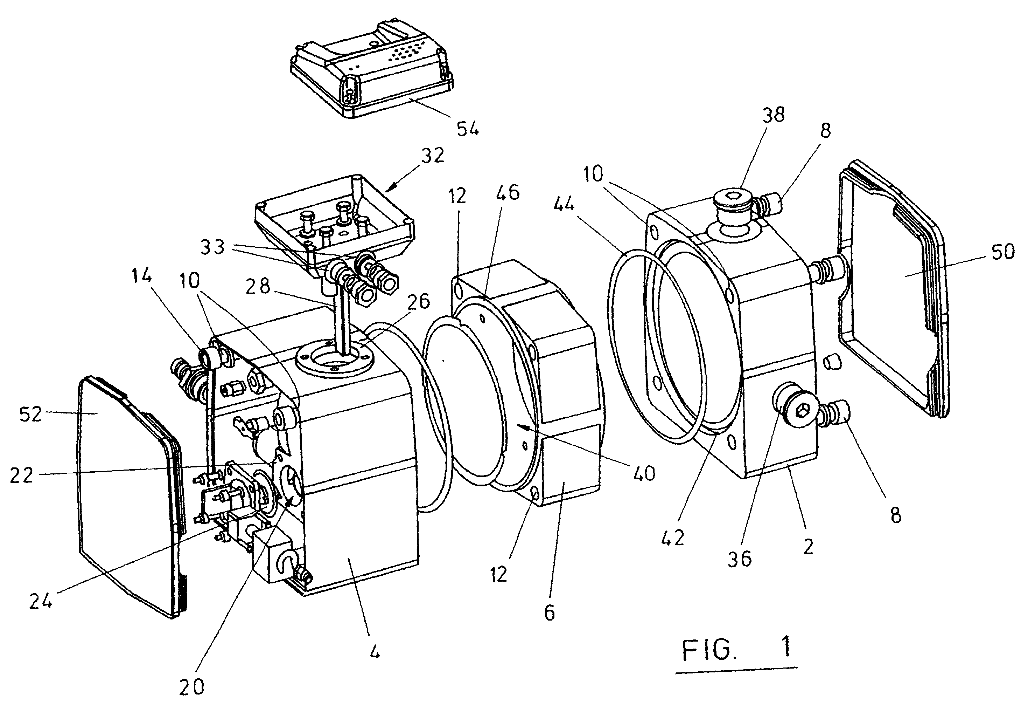

Referring to the drawings, Figure 1 shows a drain device which comprises a first end cap 2, a second end cap 4 and a body section 6 between them. The end caps are formed from an aluminium alloy by casting. The body section has a constant cross-section along its length (apart from features machined to the end faces as described below) and is formed from an aluminium alloy by extrusion.

The end caps and body section of the drain device are held together by means of threaded bolts 8 which extend through openings 10, 12 the end caps and the body section, and are held there by means of nuts 14.

Figure 2 shows the second end cap 2 in more detail. It has formed in it an outlet 20 for liquid that has accumulated in the reservoir defined by the end caps and the body section. Threaded openings are provided in an external face 22 of the second end cap by which a valve 24 can be attached to the second end cap.

The second end cap has an opening 26 for a capacitive sensor 28 for the level of liquid in the reservoir. The sensor 28 detects when the level of liquid exceeds a predetermined maximum level. Signals generated by the sensor are used to cause the valve 24 to open to maintain the level of liquid in the reservoir below the said maximum level. The valve remains open for a predetermined time which is set appropriately to ensure that liquid drains from the reservoir to a level which is at an appropriate minimum level. The sensor can be used to detect when the level of liquid is less than a predetermined minimum level to generate a signal to cause the valve to close, instead of the use of a timer. The sensor might comprise separate sensing elements for sensing each of the liquid levels.

The level sensor 28 is arranged to detect the level of liquid in the reservoir as it changes up and down the end faces of the reservoir provided by the first and second end caps, that is with the reservoir arranged so that its axis is substantially horizontal. When the length of the body section is larger than its height (when arranged with its axis horizontal), a significant increase in volume of liquid in the reservoir involves only a small change in the depth of the liquid.

The level sensor (and each sensing element within the sensor if there is more than one) can be a capacitive sensor. One of the electrodes of the sensor can be provided by the end cap of the reservoir.

The sensor is provided on a module 32 which is received in the opening 26 in the second end cap with appropriate seals provided between the module and the opening. The module can incorporate other components for controlling the device, including for example a transformer, battery, alarm indicators (visual or audible), or data processing components. The module has glands 33 for conductors, for example to supply power to the module or to allow a signal to be conducted to or from the module. The provision of control components on a module has the advantage of simplifying construction of the end cap since the number of features provided on the end cap for the components can be kept to a minimum. This can simplify assembly since the number of seals that are required for components mounted on the end cap is kept to a minimum. Maintenance of the end cap is simplified since, in the event of failure of a component, a repair can be effected simply and quickly by replacement of the module.

The first end cap 2 has a pair of inlets 34, 36 for liquid that is to be drained allowing the device to be connected in two different orientations with one of the inlets being used for the liquid to be drained while the other inlet is blocked by an appropriate blanking insert 38.

Each of the end caps has a groove 42 formed in its end face for receiving a gasket 44.

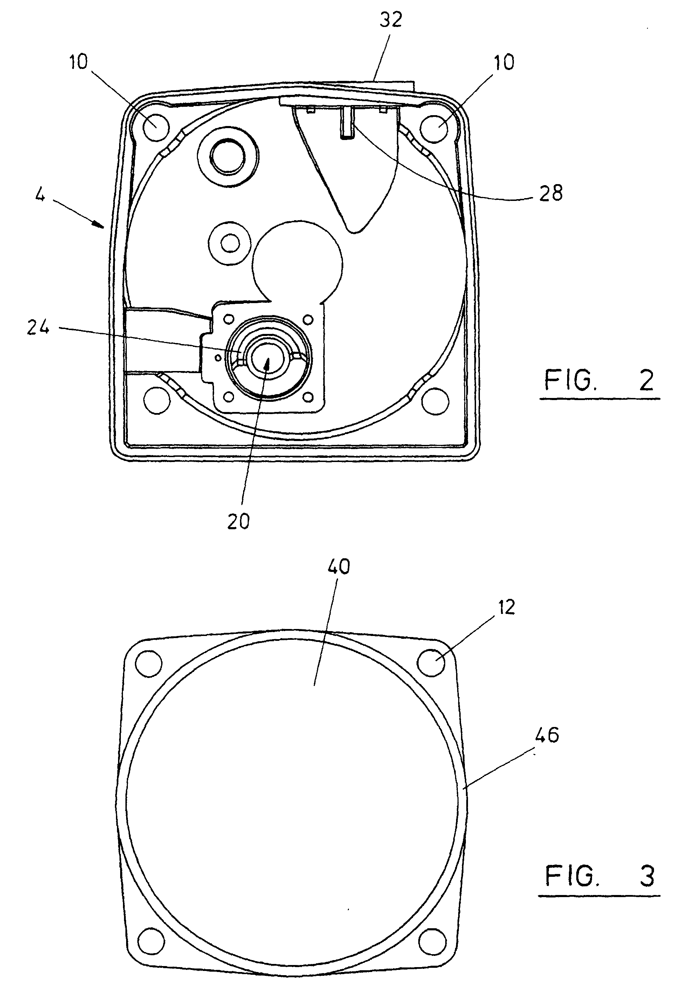

Figure 3 shows the body section 6 in more detail. It has a constant cross-section as a result of being formed by extrusion. It has a main reservoir cavity 40 and four small openings 12 spaced evenly around the periphery of the reservoir cavity, for receiving the bolts 8. The capacity of the reservoir is then determined by the length of the body section thereof.

A rib 46 is formed on each of the end faces of the body section for compressing the gasket 44 in each of the mating end faces of the end caps, to a seal between the body section and the end caps.

Closure covers 50, 52, 54 are provided for the first end cap 2, the second end cap 4 and the module 32 respectively.

## Claims

1. A drain device for discharging liquid from a pressurised gas system, which comprises a reservoir for the liquid and a liquid outlet (20) through which liquid can be discharged from the reservoir, the reservoir being defined by a body section (6) whose cross-section is substantially constant along its length, and by first and second end caps(2, 4) which have on them the inlet and the outlet for the gas in which the liquid is transported, and which are positioned at opposite ends of the body section(6) and are separable from the body section, the reservoir being arranged for use with the body section (6) extending substantially horizontally with the end caps (2, 4) providing the end walls, one of the end caps including a level sensor (28) for sensing the level of liquid in the reservoir.

2. A drain device as claimed in claim 1, in which the level sensor (28) is a capacitive sensor.

3. A drain device as claimed in claim 2, in which one of the electrodes of the capacitive sensor (28) is provided by the end cap itself.

4. A drain device as claimed in any one of claims 1 to 3, in which the outlet (20) for collected liquid is provided on one of the end caps.

5. A drain device as claimed in claim 1, in which the inlet and the outlet for the gas in which the liquid is transported are provided on one of the end caps and the outlet for collected liquid is provided in the other end cap.

6. A drain device as claimed in claim 1, in which the body section (6) of the reservoir has at least one channel (12) formed in it to receive an elongate fastener (8) by which the body section can be fastened to one of the end caps.

7. A drain device as claimed in claim 6, which includes a plurality of channels (12) formed in it arranged symmetrically around the longitudinal axis of the body section.

8. A drain device as claimed in claim 6 or claim 7, in which the cross-section of the or each channel is closed.

9. A drain device as claimed in any one of claims 6 to 8, in which each of the end caps (2, 4) has an opening (10) formed in it which can be aligned with a corresponding channel (12) in the body section (16) when the reservoir is assembled, so that the elongate fastener (18) can be located in the channel with its ends received in the openings in the end caps.

10. A drain device as claimed in any one of claims 1 to 9, in which a formation (42) is provided in at least one of the facing surfaces of one of the end caps and the corresponding end wall (46) of the body section for locating a sealing member (44).

## Patentansprüche

1. Abflußvorrichtung zum Austragen von Flüssigkeit aus einem unter Druck stehenden Gassystem, welches ein Reservoir für die Flüssigkeit und einen Flüssigkeitsauslaß (20) umfasst, durch welchen Flüssigkeit aus dem Reservoir ausgetragen werden kann, wobei das Reservoir durch einen Gehäuseabschnitt (6), dessen Querschnitt im wesentlichen entlang seiner Länge konstant ist, und durch eine erste und zweite Endkappe (2, 4) begrenzt wird, welche den Einlaß und den Auslaß für das Gas tragen, in dem die Flüssigkeit transportiert wird, und die an entgegengesetzten Enden des Gehäuseabschnitts (6) angeordnet sind und von dem Gehäuseabschnitt trennbar sind, wobei das Reservoir zur Verwendung so angeordnet ist, daß sich der Gehäuseabschnitt (6) im wesentlichen horizontal erstreckt, wobei die Endkappen (2, 4) die Endwände bereitstellen und eine der Endkappen einen Pegelmeßfühler (28) zum Messen des Flüssigkeitspegels in dem Reservoir umfasst.

2. Abflußvorrichtung nach Anspruch 1, in welcher der Pegelmeßfühler (28) ein kapazitiver Meßfühler ist.

3. Abflußvorrichtung nach Anspruch 2, in welcher eine der Elektroden des kapazitiven Meßfühlers (28) durch die Endkappe selbst gebildet wird.

4. Abflußvorrichtung nach einem der Ansprüche 1 bis 3, in welcher der Auslaß (20) für gesammelte Flüssigkeit an einer der Endkappen vorgesehen ist.

5. Abflußvorrichtung nach Anspruch 1, in welcher der Einlaß und der Auslaß für das Gas, in dem die Flüssigkeit transportiert wird, an einer der Endkappen vorgesehen sind und der Auslaß für gesammelte Flüssigkeit an der anderen Endkappe vorgesehen ist.

6. Abflußvorrichtung nach Anspruch 1, in welcher in dem Gehäuseabschnitt (6) des Reservoirs mindestens ein Kanal (12) so ausgebildet ist, daß er ein längliches Befestigungselement (8) aufnimmt, durch welches der Gehäuseabschnitt an einer der Endkappen befestigt werden kann.

7. Abflußvorrichtung nach Anspruch 6, welche eine darin ausgebildete Mehrzahl von Kanälen (12) umfasst, die symmetrisch um die Längsachse des Gehäuseabschnitts angeordnet sind.

8. Abflußvorrichtung nach Anspruch 6 oder Anspruch 7, in welcher der Querschnitt des oder jeden Kanals geschlossen ist.

9. Abflußvorrichtung nach einem der Ansprüche 6 bis 8, in welcher jede der Endkappen (2, 4) eine Öffnung (10) aufweist, die mit einem entsprechenden Kanal (12) in dem Gehäuseabschnitt (6) ausgerichtet werden kann, wenn das Reservoir zusammengebaut wird, so daß das längliche Befestigungselement (18) in dem Kanal so angeordnet werden kann, daß seine Enden in den Öffnungen in den Endkappen aufgenommen werden.

10. Abflußvorrichtung nach einem der Ansprüche 1 bis 9, in welcher in mindestens einer der gegenüberliegenden Flächen von einer der Endkappen und der entsprechenden Endwand (46) des Gehäuseabschnitts eine Ausgestaltung (42) zur Anordnung eines Dichtungselementes (44) vorgesehen ist.

## Revendications

1. Dispositif de vidange pour décharger un liquide d'une installation de gaz sous pression, qui comprend un réservoir pour le liquide et un orifice d'évacuation de liquide (20) à travers lequel le liquide peut être déchargé du réservoir, le réservoir étant défini par une partie de corps (6), dont la section est sensiblement constante sur sa longueur, et par des premier et deuxième couvercles d'extrémité (2, 4) sur lesquels sont prévus les orifices d'admission et d'évacuation pour le gaz dans lequel le liquide est transporté et qui sont positionnés à des extrémités opposées de la partie de corps (6) et peuvent être séparés de la partie de corps, le réservoir étant agencé pour être utilisé avec la partie de corps (6) s'étendant sensiblement horizontalement avec les couvercles d'extrémité (24) réalisant les parois d'extrémité, l'un des couvercles d'extrémité comprenant un capteur de niveau (28) pour détecter le niveau de liquide dans le réservoir.

2. Dispositif de vidange selon la revendication 1, dans lequel le capteur de niveau (28) est un capteur capacitif.

3. Dispositif de vidange selon la revendication 2, dans lequel l'une des électrodes du capteur capacitif (28) est réalisée par le couvercle d'extrémité lui-même.

4. Dispositif de vidange selon l'une quelconque des revendications 1 à 3, dans lequel l'orifice d'évacuation (20) pour le liquide recueilli est prévu sur l'un des couvercles d'extrémité.

5. Dispositif de vidange selon la revendication 1, dans lequel les orifices d'admission et d'évacuation pour le gaz dans lequel le liquide est transporté sont prévus sur l'un des couvercles d'extrémité et l'orifice d'évacuation pour le liquide recueilli est prévu dans l'autre couvercle d'extrémité.

6. Dispositif de vidange selon la revendication 1, dans lequel la partie de corps (6) du réservoir a au moins un canal (12) formé dans celle-ci pour recevoir un dispositif de fixation allongé (8) par lequel la partie de corps peut être fixée à l'un des couvercles d'extrémité.

7. Dispositif de vidange selon la revendication 6, qui comprend une pluralité de canaux (12) formés dans celui-ci agencés symétriquement autour de l'axe longitudinal de la partie de corps.

8. Dispositif de vidange selon la revendication 6 ou la revendication 7, dans lequel la section du ou de chaque canal est fermée.

9. Dispositif de vidange selon l'une quelconque des revendications 6 à 8, dans lequel chacun des couvercles d'extrémité (2, 4) a une ouverture (10) formée dans celui-ci qui peut être alignée avec un canal correspondant (12) dans la partie de corps (16) lorsque le réservoir est assemblé, de sorte que le dispositif de fixation allongé (18) puisse être positionné dans le canal avec ses extrémités reçues dans les ouvertures des couvercles d'extrémité.

10. Dispositif de vidange selon l'une quelconque des revendications 1 à 9, dans lequel une formation (42) est prévue dans au moins une des surfaces se faisant face de l'un des couvercles d'extrémité et de la paroi d'extrémité correspondante (46) de la partie de corps pour positionner un élément d'étanchéité (44).
